# NEUE EUROPÄISCHE PATENTSCHRIFT

(11) **EP 1 157 871 B2**
(45) Veröffentlichungstag und Bekanntmachung des Hinweises auf die Entscheidung über den Einspruch: **26.12.2007**
(45) Hinweis auf die Patenterteilung: 16.06.2004
(21) Anmeldenummer: 01108987.7
(22) Anmeldetag: 11.04.2001
(51) Int. Cl.: B60J 7/20, B62D 25/10

(54) **Cabriolet-Fahrzeug**
Convertible vehicle
Véhicule convertible

(30) Priorität: 25.05.2000 DE 20009572 U
(43) Veröffentlichungstag der Anmeldung: 28.11.2001
(73) Patentinhaber: Wilhelm Karmann GmbH, 49084 Osnabrück (DE)
(72) Erfinder: Ellermann, Peter, 49163 Hunteburg (DE); Steven, Detlef, 49170 Hagen a.T.W. (DE); Exner, Markus, 49191 Belm (DE)
(74) Vertreter: Busse & Busse Patentanwälte

(56) Entgegenhaltungen:
- EP-A- 0 949 104
- EP-A- 1 084 886
- DE-A- 19 706 418
- DE-A- 19 756 981
- DE-C- 19 516 876
- DE-C- 19 516 877
- DE-C- 19 756 062
- DE-C- 19 836 675
- DE-C- 19 851 181
- DE-U- 29 801 914

## Beschreibung

Die Erfindung betrifft ein Cabriolet-Fahrzeug mit einer im rückwärtigen Fahrzeugbereich vorgesehenen Heckklappe.

Bei einem bekannten Cabriolet-Fahrzeug dieser Art (DE 44 45 944 C1) ist im rückwärtigen Fahrzeugbereich eine Heckklappe vorgesehen, die einerseits bei Bewegung um eine erste vordere Schwenkachse in eine erste, den Kofferraum nach hinten freigebende Öffnungsstellung und andererseits bei Bewegung um eine zweite hintere Schwenkachse in eine zweite, insbesondere den Verdeckkasten für ein Faltverdeck nach oben freigebende Öffnungsstellung schwenkbar an der Fahrzeugkarosserie abgestützt ist. Die Heckklappe weist dabei einen eine aufwendige Antriebskinematik erfordernden Hilfsrahmen auf, mit dem auch der Nutzraum im Heckbereich des Fahrzeuges nachteilig eingeschränkt ist. Gemäß EP 1 084 886 A ist die Heckklappe am hinteren Endbereich durch nur eine zentrale Haltevorrichtung festgelegt, so daß zum Erreichen der zur Scharnierfunktion erforderlichen Stabilität großbauende und aufwendige Schloßteile oder seitliche Zusatzteile erforderlich sind. Eine weitere Gattungsgemäße Hechklappe ist aus der DE 19 516 876 C bekannt.

Der Erfindung liegt die Aufgabe zugrunde, ein Cabriolet-Fahrzeug der eingangs genannten Art zu schaffen, dessen Heckklappe im hinteren Endbereich mit raumsparend angeordneten und einfach aufgebauten Stützbauteilen versehen ist, die eine einfach handhabbare und bei der Öffnungsbewegung besonders stabile Schwenkverbindung der Heckklappe ermöglichen.

Die Erfindung löst diese Aufgabe mit den Merkmalen des Anspruchs 1. Hinsichtlich wesentlicher weiterer Ausgestaltungen wir auf die Ansprüche 2 bis 14 verwiesen.

Das erfindungsgemäß ausgebildete Cabriolet-Fahrzeug ist im Bereich der Heckklappe mit einer direkt mit dieser zusammenwirkenden, hinteren Abstützung versehen. Diese Abstützung ist in Form von zwei Schließvorrichtungen ausgebildet, die jeweils eine am hinteren Randbereich der Heckklappe vorgesehene Verbindungsbaugruppe und eine karosserieseitig festgelegte Gegenbaugruppe aufweisen. Mit dieser Vorrichtung ist in Verbindungsstellung der Baugruppen sowohl eine Abstützung in der heckseitigen Schließstellung der Heckklappe als auch deren gesteuerte Schwenkbewegung zur Freigabe des Verdeckkastens erreicht.

Die Schließvorrichtung ist dabei mit einem Stützkörper versehen, der formschlüssig in einen gegenüberliegenden karosseriefesten Aufnahmekörper so einführbar ist, daß damit bei einer nachfolgenden Bewegungseinleitung die Gewichts- und Beschleunigungskräfte der sich vorderseitig im Bereich des Verdeckkastens öffnenden Heckklappe aufgenommen werden. Damit sind zusätzliche Stütz- und Aussteifungsteile an der Unterseite der Heckklappe entbehrlich und Einschränkungen des Kofferraumvolumens vermieden.

Die Schließvorrichtung weist einen als Stützprisma ausgebildeten Stützkörper auf, der an dem karosseriefesten Aufnahmekörper durch ein automatisch betätigbares Verriegelungselement festgelegt wird. Durch entsprechende Anlageflächen ist die kraftschlüssige Verbindung mit dem Verriegelungselement durch einen zusätzlichen Formschluß der beiden Verbindungskonturen stabilisiert, die Stütz- und Bewegungskräfte können optimal in die Karosserie des Fahrzeugs eingeleitet werden und damit sind Überbelastungen von Baugruppen sowohl in der Schließ- als auch in der Schwenkstellung der Heckklappe vermieden.

Weitere Einzelheiten und vorteilhafte Ausgestaltungen ergeben sich aus der nachfolgenden Zeichnung, in der der Gegenstand der Erfindung anhand eines Ausführungsbeispiels näher veranschaulicht ist. In der Zeichnung zeigen:
- Fig. 1: eine teilweise geschnittene Heckansicht eines Cabriolet-Fahrzeugs mit in Schließstellung befindlicher Heckklappe,
- Fig. 2: eine Ausschnittsdarstellung gemäß einer Linie II-II in Fig. 1, mit einer die Heckklappe haltenden Schließvorrichtung,
- Fig. 3: eine Schnittdarstellung ähnlich Fig. 2 mit der Schließvorrichtung in einer Öffnungsstellung,
- Fig. 4: eine Schnittdarstellung ähnlich Fig. 2 mit an der Schließvorrichtung angelenkter Heckklappe in einer Schwenkstellung,
- Fig. 5: eine perspektivische Einzeldarstellung der Schließvorrichtung mit in Eingriffsstellung gemäß Fig. 2 befindlichem Verriegelungselement, und
- Fig. 6: eine Perspektivdarstellung ähnlich Fig. 5 mit der Schließvorrichtung in der Öffnungsstellung gemäß Fig. 2.

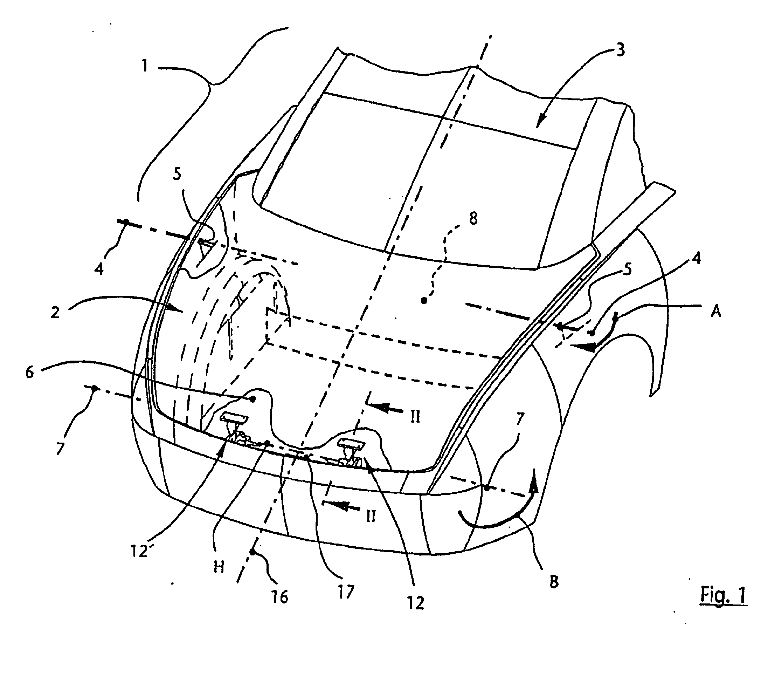

In Fig. 1 ist in einer schematischen Ausschnittsdarstellung ein insgesamt mit 1 bezeichnetes Cabriolet-Fahrzeug in einer Rückansicht dargestellt, wobei eine im rückwärtigen Fahrzeugbereich vorgesehene Heckklappe 2 sowie ein vor dieser angeordnetes Faltverdeck 3 (in Schließstellung) deutlich werden. Die Heckklappe 2 weist eine vordere Schwenkachse 4 mit nicht näher dargestellten Bauteilen 5 einer vorderen Abstützung auf. Bei einer Bewegung der Heckklappe um diese Schwenkachse 4 (Schwenk-Pfeil A) wird die Heckklappe 1 in eine einen Kofferraum 6 nach hinten freigebende Öffnungsstellung verlagert. Diese Öffungsbewegung kann von Hand oder mittels nicht näher dargestellter Antriebsbauteile erfolgen. Im hinteren Bereich ist die Heckklappe 2 durch eine hintere Schwenkachse 7 bildende Bauteile so abgestützt, daß die Heckklappe 2 in eine zweite, insbesondere einen vorderen Verdeckkasten 8 zur Ablage des Faltverdecks 3 freigebende Öffnungsstellung verschwenkbar ist (Schwenk-Pfeil B).

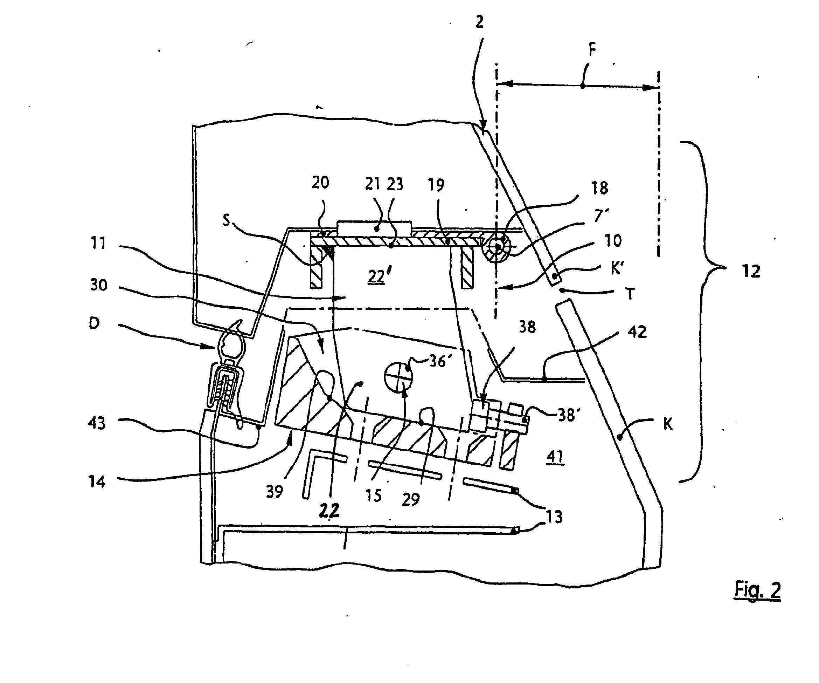

Das Cabriolet-Fahrzeug 1 ist erfindungsgemäß mit einer Heckklappe 2 versehen, deren hintere Abstützung im Bereich der Schwenkachse 7 von zumindest einer einen an der Heckklappe 2 über eine Scharniereinheit 10 angelenkten Stützkörper 11 aufweisenden Schließvorrichtung 12 gebildet ist (Fig. 2). Der Stützkörper 11 ist mit seinem freien Endbereich in einen karosseriefesten, insbesondere im Bereich eines Haltebleches 13 abgestützten Aufnahmekörper 14 einführbar und in dieser Verbindungsstellung (Fig. 2) durch ein zentrales Verriegelungselement 15 so festgelegt, daß für die Heckklappe 2 eine in jeder Bewegungsphase schwenkstabile Abstützung gebildet ist.

Die Perspektivdarstellung gemäß Fig. 1 verdeutlicht, daß die Heckklappe 2 zwei symmetrisch zur Fahrzeuglängsmittelebene 16 angeordnete Schließvorrichtungen 12 und 12' aufweist. Die nachfolgende Beschreibung bezieht sich jeweils auf die Schließvorrichtung 12, wobei es sich versteht, daß die beschriebenen Baugruppen entsprechend spiegelbildlich auch bei der zweiten Schließvorrichtung 12' vorhanden sind.

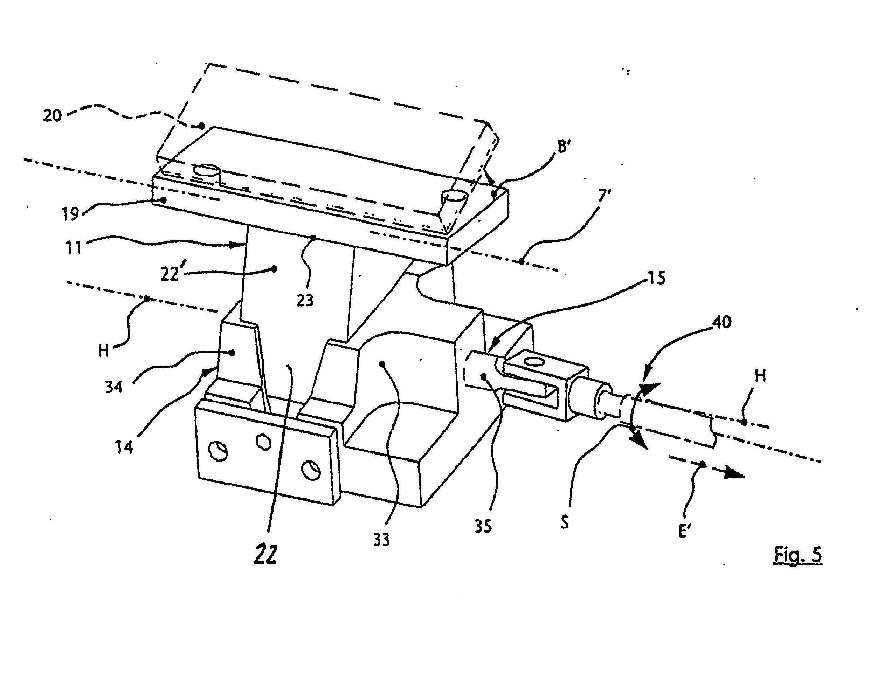

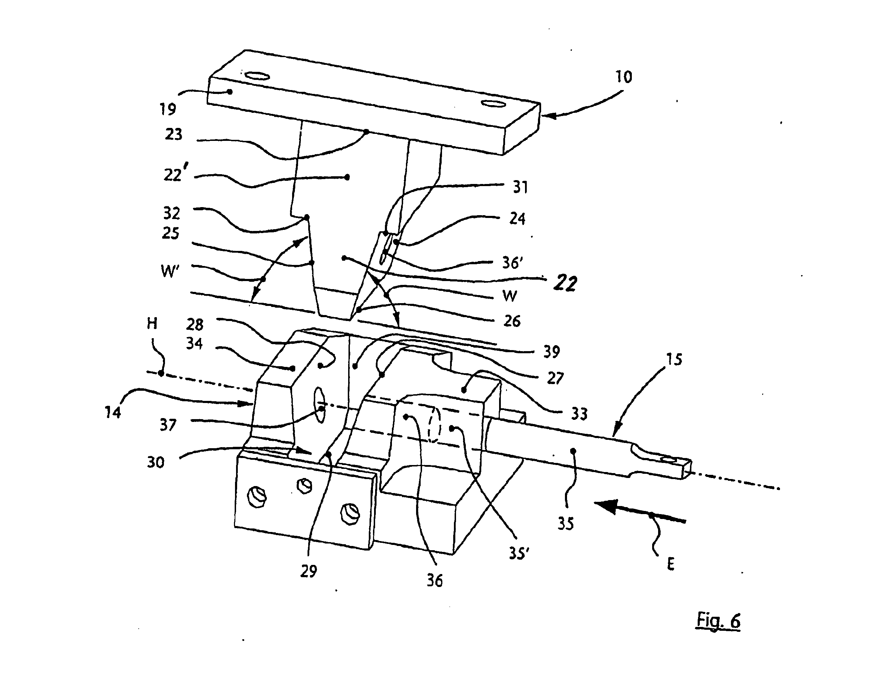

Die Schließvorrichtung 12 bildet insgesamt eine mit der im Bereich der vorderen Schwenkachse 4 vorgesehenen Abstützung 5 zusammenwirkende Baueinheit, die in das automatische Antriebskonzept des Cabriolet-Fahrzeugs 1 so integriert ist, daß über entsprechende Steuerbaugruppen (nicht dargestellt) die vorbeschriebenen Öffnungsbewegungen (Pfeil A, Pfeil B) ausführbar sind. Die Schließvorrichtung 12 weist im Bereich des Verriegelungselementes 15 eine dessen Bewegung in die Schließ- oder Freigabestellung (Fig. 5, Fig. 6) steuerndes Antriebsorgan 17 (Fig. 1) auf, das insbesondere im Heckbereich des Fahrzeugs im Bereich der Mittelängsebene 16 so angeorndet ist, daß die beiden Schließvorrichtung 12 und 12' gemeinsam betätigt werden können.

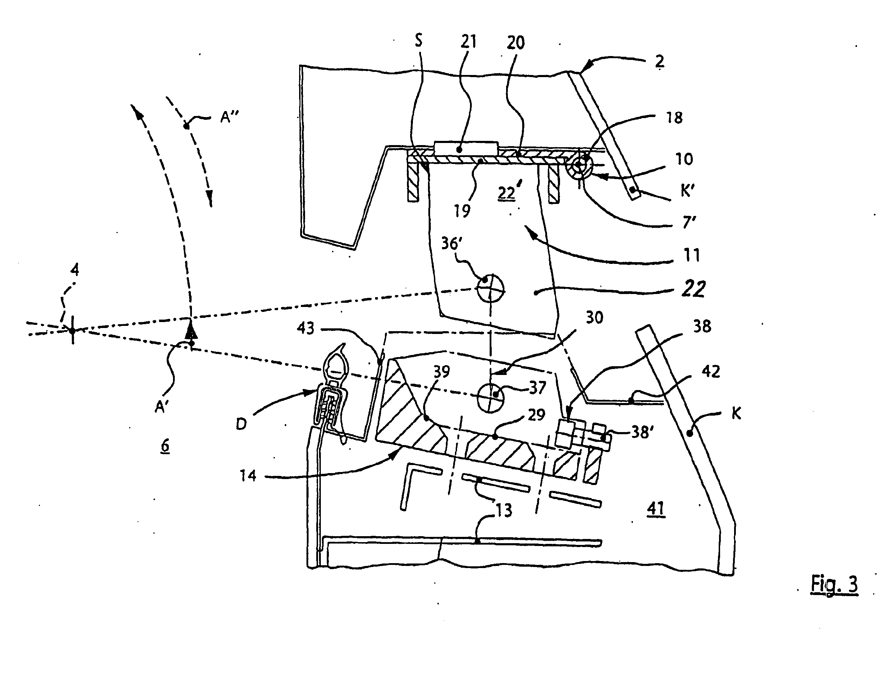

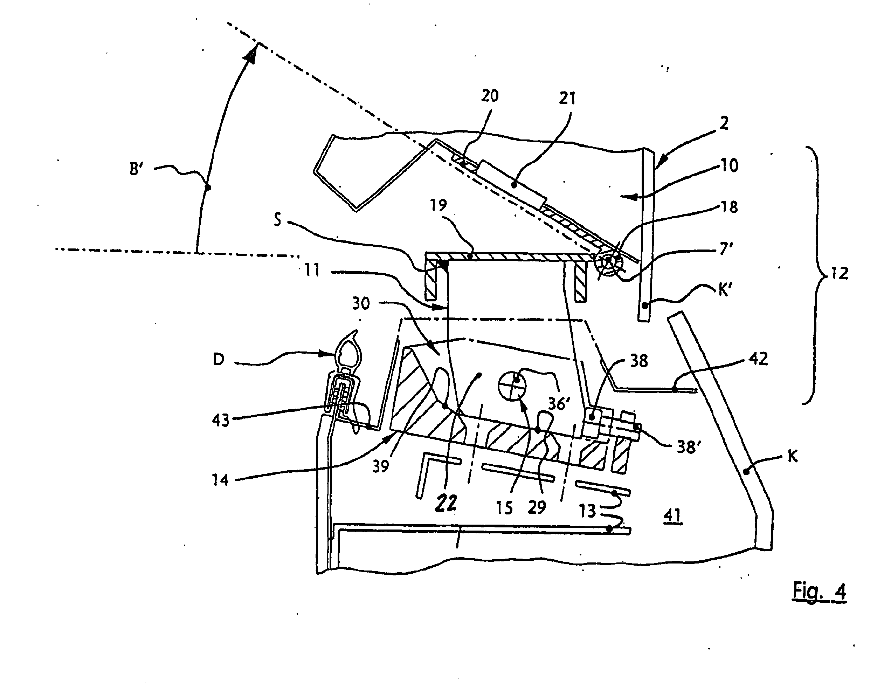

Nach Verlagerung des Verriegelungselementes 15 (Pfeil E') in die Freigabestellung (Fig. 3, Fig. 6) sind die Heckklappe 2 und der Stützkörper 11 mit der Scharniereinheit 10 gemeinsam in die den Kofferraum 6 freigebende Stellung (Pfeil A', Fig. 3) hochschwenkbar und danach ist diese Baugruppe gmeinsam mit der Heckklappe 2 in die Verbindungsstellung (Fig. 2) rückführbar (Pfeil A''; Fig. 3). In dieser Verbindungsstellung wird das Verriegelungselement 15 in die Schließstellung (Pfeil E) verlagert und nach Freigabe der vorderen Abstützungen bei 5 kann die Heckklappe 2 im Bereich der hinteren Scharniereinheit 10 nunmehr in die Öffnungsstellung geschwenkt werden (Pfeil B', Fig. 4), so daß der Verdeckkasten 8 unterhalb des Faltverdecks 3 für dessen Aufnahme freigegeben wird. Die Verdeckkasten-Öffnungsstellung (bzw. Schließstellung) der Heckklappe 2 wird durch deren Schwenkbewegung (Pfeil B') um eine von der Scharniereinheit 10 gebildete hintere Schwenkachse 7' bestimmt, die in optimaler Anordnung mit der Scharniereinheit 10 bis in den Nahbereich des Fahrzeughecks (Abstand F; Fig. 2) verlagert werden kann.

Die Scharniereinheit 10 besteht aus zwei im Bereich eines Gelenkteils 18 die Schwenkachse 7' bildenden Scharnierplatten 19 und 20, wobei die Scharnierplatte 19 beispielsweise durch eine Schweißverbindung (bei S) mit dem Stützkörper 11 verbunden ist. In der gemäß Fig. 3 dargestellten Übereinanderlage der beiden Scharnierplatten 19 und 20 ist ein zusätzliches Halteglied 21 wirksam, mit dem eine unbeabsichtigte Bauteil- oder Öffnungsbewegung in Pfeilrichtung B' (Fig. 4) vermieden ist. Als Halteglied 21 ist dabei insbesondere ein Permanent- oder Elektromagnet denkbar, mit dem die Scharniereinheit 10 während einer den Kofferraum 6 öffnenden Bewegungssteuerung in der gemäß Fig. 2 dargestellten Anlagestellung gehalten wird. Ebenso ist denkbar, daß an Stelle des magnetischen Haltegliedes 21 ein nicht näher dargestellter Clipverbinder o. dgl.

Riegelteil vorgesehen ist, der bei einer entsprechenden Bewegung der Heckklappe 2 mit der Schließvorrichtung 12 (Fig. 3) automatisch verriegelt ist und bei Schwenkung der Heckklappe 2 (Fig. 4) um die Achse 7 bzw. 7' automatisch entriegelt wird.

Die Verbindungsstellungen der Schließvorrichtung 12 gemäß Fig. 2 und Fig. 5 verdeutlichen, daß der Stützkörper 11 am Aufnahmekörper 14 formschlüssig anlegbar ist und in dieser Verbindungsstellung das Verriegelungselement 15 eine kraftschlüssige Verbindung bildet. Damit ist eine besonders stabile Stützverbindung der Bauteile erreicht. Der Stützkörper 11 ist vorteilhaft als ein zum Aufnahmekörper 14 hin im wesentlichen keilförmig verlaufendes Stützprisma 22 (Ponton-Form) ausgebildet, dessen an einem Basisteil (22') befindliche Grundfläche 23 an der Scharniereinheit 10 bzw. der Scharnierplatte 19 anliegt. Jeweilige Mantel- und Deckflächen 24, 25 und 26 sind zumindest bereichsweise an jeweiligen Stützflächen 27, 28 und 29 einer im Aufnahmekörper 14 vorgesehenen Stützausnehmung 30 anlegbar (Fig. 5, Fig. 6).

Die beiden in Fahrzeuglängsrichtung verlaufenden und spiegelbildlich am Stützprisma 22 angeordneten Mantelflächen 24 und 25 definieren mit ihren Schrägungswinkeln W und W' eine Keilform, mit der das Stützprisma 22 an den entsprechend verlaufenden Stützflächen 27 und 28 im Aufnahmekörper 14 anlegbar ist. Zusätzlich weist das Stützprisma 22 im Bereich der beiden Mantelflächen 24 und 25 fußseitige Stützschultern 31 und 32 auf, die in Verbindungsstellung oberseitig am Aufnahmekörper 14 abstützbar sind (Fig. 5).

Der Aufnahmekörper 14 ist mit jeweiligen die Stützausnehmung 30 mit den Stützflächen 27 und 28 begrenzenden Haltebacken 33 und 34 versehen, an denen das als Schubbolzen 35 vorgesehene Verriegelungselement 15 abstützbar ist. Der Schubbolzen 35 ist in der Haltebacke 33 in einer Durchgangsbohrung 36 verschiebbar gehalten, so daß bei zu dieser fluchtender Anordnung einer im Stützprisma 22 befindlichen Durchgangsbohrung 36 der Schubbolzen 35 in die Verbindungsstellung verlagerbar ist (Pfeil E, Fig. 6) und dabei ein Endbereich 35' des Schubbolzens 35 in eine Aufnahmeöffnung 37 der Haltebacke 34 eingeführt werden kann (Bewegungsachse: H).

Für die positionsgenaue Abstützung des Stützprismas 22 in der Stützausnehmung 30 ist in dieser ein bodenseitiger Anschlag 38 vorgesehen, der mittels einer Stellschraube 38' o. dgl. eine Einstellung ermöglicht, so daß insbesondere das Spaltmaß T der Heckklappe 2 zum hinteren Karosseriebereich K hin und die Lage der Dichtung D optimal angepaßt werden können (Fig. 2). In der Stützausnehmung 30 ist gegenüberliegend dem Anschlag 38 eine Führungsfläche 39 vorgesehen, mittels der die Bewegung des Stützprismas 22 in die dargestellte Verbindungsstellung geführt wird.

Bei einer Schließbewegung der Heckklappe 2 (Verschließen den Kofferraumes) wird das Stützprisma 22 zuerst über die Führungsfläche 39 in die Stützausnehmung 30 geführt und am Ende dieser Bewegungsphase erfolgt über die beiden Stützflächenpaarungen 24 und 27 bzw. 25 und 28 eine Zentrierung, so daß eine in Fahrzeugquerrichtung (Y-Richtung) exakte Position der Heckklappe 2 erreicht ist. Mit dem Anschlag 38 wird die in Fahrzeuglängsrichtung (X-Richtung) optimale Lage eingestellt und zusätzlich kann durch Auflage des Stützprismas 22 auf der Stützfläche 29 der Stützausnehmung 30 die Endposition in senkrechter Richtung (Z-Richtung) bestimmt werden.

Die Zusammenschau von Fig. 5 und Fig. 6 verdeutlicht die Bewegung des Schubbolzens 35, an dem in der dargestellten Ausführungsform ein zum Antrieb 17 (Fig. 1) verlaufendes Verriegelungsgestänge 40 angelenkt ist. Dieses Verriegelungsgestänge 40 kann beispielsweise mit einem doppelseitig wirkenden Hydraulikzylinder (nicht dargestellt) als das Antriebsorgan 17 (Fig. 1) versehen sein. Ebenso ist denkbar, am Verriegelungsgestänge 40 einen E-Motor mit einem Übersetzungsgetriebe, einer Drehscheibe o. dgl. (nicht dargestellt) anzuordnen, so daß das Gestänge 40 und der Schubbolzen 35 durch eine Schwenk-Schub-Bewegung (Pfeile E, E', S; Fig. 5) in Richtung der gemeinsamen Achse H verlagerbar und in die Verriegelungsstellung einführbar bzw. aus dieser rückführbar sind.

Die vorbeschriebene Schließvorrichtung 12 ist in kleinbauender Ausführung so an der Heckklappe 2 bzw. an Teilen der Fahrzeugkarosserie K, K' festlegbar, daß nur ein geringer Einbauraum benötigt wird. Insbesondere die Baugruppe im Bereich des Aufnahmekörpers 14 kann im hinteren Karosseriebereich 41 durch entsprechende Abdeckungen 42, 43 so verkleidet werden, daß eine optisch ansprechende Gestaltung erreicht ist.

## Patentansprüche

1. Cabriolet-Fahrzeug mit einer im rückwärtigen Fahrzeugbereich vorgesehenen Heckklappe (2), die einerseits bei Bewegung um eine erste vordere Schwenkachse (4) in eine erste, den Kofferraum (6) nach hinten freigebende Öffnungsstellung an karosserieseitigen Stützbauteilen (5) schwenkbar gehalten ist und andererseits zur Bewegung um eine zweite hintere Schwenkachse (7; 7') in eine zweite, den Verdeckkasten (8) insbesondere für ein Faltverdeck (3) nach oben freigebende Öffnungsstellung verschwenkbar an der Fahrzeugkarosserie mittels einer Schließvorrichtung abgestützt ist, wobei die hintere Abstützung der Heckklappe (2) von zwei spiegelbildlich zur Fahrzeuglängsmittelebene (16) angeordneten Schließvorrichtungen (12, 12') gebildet ist, die jeweils mit einem an der Heckklappe (2) über eine Scharniereinheit (10) angelenkten Stützkörper (11) versehen sind, der mit seinem freien Endbereich in einen karosseriefesten Aufnahmekörper (14) einführbar und in dieser Verbindungsstellung durch ein Verriegelungselement (15) festlegbar ist, und wobei die Scharniereinheit (10) jeweils zwei in einem Gelenk (18) verbundene Scharnierplatten (19, 20) aufweist, und der mit seinem freien Endbereich in den karosseriefesten Aufnahmekörper (14) einführbare Stützkörper (11) rückseitig mit der unteren (19) Scharnierplatte verbunden ist.

2. Cabriolet-Fahrzeug nach Anspruch 1, **dadurch gekennzeichnet, daß** die als Baueinheit zusammenwirkenden Schließvorrichtungen (12, 12') mit den Stützkörpern (11), den Aufnahmekörpern (14) und den Verriegelungselementen (15) eine in Fahrzeuglängs- und querrichtung exakt positionierbare und in der Bewegungsphase schwenkstabile Abstützung für die Heckklappe (2) bilden.

3. Cabriolet-Fahrzeug nach einem der Ansprüche 1 bis 2, **dadurch gekennzeichnet, daß** der Stützkörper (11) zumindest bereichsweise als ein prisma-, keil- oder pontonförmiges Prismoid ausgebildet ist.

4. Cabriolet-Fahrzeug nach Anspruch 3, **dadurch gekennzeichnet, daß** an der Scharnierplatte (19) eine Grundfläche (23) des als ein Stützprisma (22) ausgebildeten Prismoids festgelegt ist und dessen Mantelund/oder Deckfläche(n) (24, 25, 26) zumindest bereichsweise an jeweiligen Stützflächen (27, 28, 29) einer im Aufnahmekörper (14) vorgesehenen Stützausnehmung (30) anlegbar sind.

5. Cabriolet-Fahrzeug nach Anspruch 4, **dadurch gekennzeichnet, daß** zwei in Fahrzeuglängsrichtung (16) verlaufende und spiegelbildlich angeordnete Mantelflächen (24, 25) des Stützprismas (22) mit ihren Schrägungswinkeln (W, W') eine Keilform definieren, die an den entsprechend verlaufenden Stützflächen (27, 28) im Aufnahmekörper (14) anlegbar ist.

6. Cabriolet-Fahrzeug nach einem der Ansprüche 4 bis 5, **dadurch gekennzeichnet, daß** die beiden Mantelflächen (24, 25) des Stützprismas (22) in eine fußseitige Stützschulter (31, 32) übergehen.

7. Cabriolet-Fahrzeug nach einem der Ansprüche 4 bis 6, **dadurch gekennzeichnet, daß** als Verriegelungselement (15) ein Schubbolzen (35) vorgesehen ist, der an jeweiligen die Stützausnehmung (30) mit den Stützflächen (27, 28) begrenzenden Haltebacken (33, 34) des Aufnahmekörpers (14) festlegbar ist.

8. Cabriolet-Fahrzeug nach Anspruch 7, **dadurch gekennzeichnet, daß** der Schubbolzen (35) in einer der Haltebacken (33) durch eine Durchgangsbohrung (36) verschiebbar gehalten ist und in Verbindungsstellung zu dieser fluchtend eine Durchgangsbohrung (36') im Stützprisma (22) angeordnet ist.

9. Cabriolet-Fahrzeug nach einem der Ansprüche 4 bis 8, **dadurch gekennzeichnet, daß** das Stützprisma (22) in der Stützausnehmung (30) des Aufnahmekörpers (14) an einem einstellbaren Anschlag (38) anlegbar ist.

10. Cabriolet-Fahrzeug nach einem der Ansprüche 4 bis 9, **dadurch gekennzeichnet, daß** der Aufnahmekörper (14) eine bodenseitig in der Stützausnehmung (30) auslaufende Führungsfläche (39) aufweist.

11. Cabriolet-Fahrzeug nach einem der Ansprüche 7 bis 10, **dadurch gekennzeichnet, daß** der Schubbolzen (35) über ein Getriebe und/oder ein Verriegelungsgestänge (40) mit dem Antriebsorgan (17) verbunden ist.

12. Cabriolet-Fahrzeug nach Anspruch 11, **dadurch gekennzeichnet, daß** als Antriebsorgan (17) ein Hydraulikzylinder, ein Elektromotor o. dgl. vorgesehen ist.

13. Cabriolet-Fahrzeug nach einem der Ansprüche 2 bis 12, **dadurch gekennzeichnet, daß** die Scharniereinheit (10) mit einem die beiden Scharnierplatten (19, 20) verspannenden Halteglied (21) in Übereinanderlage festlegbar sind, wobei ein automatisch entriegelbarer Magnetkörper als Halteglied (21) vorgesehen ist.

14. Cabriolet-Fahrzeug nach einem der Ansprüche 1 bis 13, **dadurch gekennzeichnet, daß** die Scharniereinheit (10) als Halteglied (21) einen lösbaren Clip-Verbinder aufweist.

## Claims

1. Convertible vehicle having, provided in the rear part of the vehicle, a rear lid (2) which on the one hand is pivotably held on supporting components (5) at the bodywork for movement about a first, front axis of pivot (4) to a first open position which gives access to the boot (6) from the rear, and which on the other hand is pivotably supported on the bodywork of the vehicle by means of a closure arrangement for movement about a second, rear axis of pivot (7; 7') to a second open position which gives access from above to the compartment (8) for a soft top, and particularly for a folding soft top (3), the rear support for the rear lid (2) being formed by two closure devices (12, 12') which are arranged as mirror images of one another about the longitudinal centre plane (16) of the vehicle and which are each provided with a supporting body (11) which is hinged to the rear lid (2) by means of a hinge unit (10), which supporting body (11) can be inserted, at its free end region, in a receiving body (14) solid with the bodywork and can be locked in this connecting position by a locking member (15), and each hinge unit (10) having two hinge plates (19, 20) which are connected at a joint (18), and the supporting body (11), which can be inserted at its free end region in the receiving body (14) solid with the bodywork, being connected at the rear end to the lower hinge plate (19).

2. Convertible vehicle according to claim 1, **characterised in that** the closure devices (12, 12'), which work together as a unit and have the supporting bodies (11), the receiving bodies (14) and the locking members (15), form a support for the rear lid (2) which can be exactly positioned in the longitudinal and transverse directions of the vehicle and which pivots stably in the moving phase.

3. Convertible vehicle according to either of claims 1 and 2, **characterised in that** the supporting body (11) is, at least in part, in the form of a prism-shaped, wedge-shaped or pontoon-shaped prismoid.

4. Convertible vehicle according to claim 3, **characterised in that** a base face (23) of the prismoid which is in the form of a supporting prism (22) is secured to the hinge-plate (19), and its side and/or covering face(s) (24, 25, 26) can be applied, at least in part, to respective supporting faces (27, 28, 29) of a supporting recess (30) provided in the receiving body (14).

5. Convertible vehicle according to claim 4, **characterised in that** two side-faces (24. 25) of the supporting prism (22), which extend in the longitudinal direction (16) of the vehicle and are arranged as mirror images of one another, define, by the angles (W, W') at which they are inclined, a wedge-shape which can be applied to the correspondingly extending supporting faces (27, 28) in the receiving body (14).

6. Convertible vehicle according to either of claims 4 and 5, **characterised in that** the two side-faces (24, 25) of the supporting prism (22) join up with supporting shoulders (31, 32) at the base end.

7. Convertible vehicle according to one of claims 4 to 6, **characterised in that** what is provided as the locking member (15) is a sliding pin (35) which can be held in place against respective holding jaws (33, 34) belonging to the receiving body (14), which jaws (33, 34) define the supporting recess (30) having the supporting faces (27, 28).

8. Convertible vehicle according to claim 7, **characterised in that** the sliding pin (35) is held to be displaceable in one of the holding jaws (33) by a through-bore (36), and there is arranged in the supporting prism (22) a through-bore (36') which aligns with the first through-bore (36) in the connecting position.

9. Convertible vehicle according to one of claims 4 to 8, **characterised in that** the supporting prism (22) can be applied to an adjustable stop (38) in the supporting recess (30) in the receiving body (14).

10. Convertible vehicle according to one of claims 4 to 9, **characterised in that** the receiving body (14) has a guiding face (39) which ends, at the bottom end, in the supporting recess (30).

11. Convertible vehicle according to one of claims 7 to 10, **characterised in that** the sliding pin (35) is connected to the actuating member (17) via gearing and/or a locking linkage (40).

12. Convertible vehicle according to claim 11, **characterised in that** what is provided as the actuating member (17) is a hydraulic cylinder or an electric motor or the like.

13. Convertible vehicle according to one of claims 2 to 12, **characterised in that** the hinge unit (10) can be held firm in a superimposed position by a holding member (21) which secures the two hinge plates (19, 20) together, an automatically unlockable magnetic body being provided as the holding member (21).

14. Convertible vehicle according to one of claims 1 to 13, **characterised in that** the hinge unit (10) has a releasable clip-type connector as the holding member (21).

## Revendications

1. Véhicule décapotable comportant un hayon (2) prévu dans la zone arrière du véhicule qui, d'une part, est maintenu de façon pivotante au niveau d'éléments de support (5) situés du côté de la carrosserie, afin, lors d'un mouvement autour d'un premier axe de pivotement avant (4), d'adopter une première position d'ouverture libérant le coffre (6) par l'arrière et, d'autre part, est étayé de façon pivotante au moyen d'un dispositif de fermeture présent au niveau de la carrosserie du véhicule afin, lors d'un mouvement autour d'un deuxième axe de pivotement arrière (7 ; 7'), d'adopter une deuxième position d'ouverture libérant en particulier par le haut le coffre à capote (8) contenant une capote pliante (3),
dans lequel
l'étayage arrière du hayon (2) est formé par deux dispositifs de fermeture (12, 12') disposés de façon symétrique par rapport au plan médian longitudinal du véhicule (16), qui sont respectivement pourvus d'un corps de support (11) fixé de façon articulée au hayon (2) par le biais d'une unité de charnière (10), ce corps de support pouvant être introduit par sa zone d'extrémité libre dans un corps de réception (14) fixé à la carrosserie, et pouvant être fixé dans cette position à l'aide d'un élément de verrouillage (15), et l'unité de charnière (10) présente respectivement deux plaques de charnière (19, 20) reliées dans une articulation (18), et le corps de support (11), qui peut être introduit par sa zone d'extrémité libre dans le corps de réception (14) fixé à la carrosserie, est relié au niveau de son côté arrière à la plaque de charnière inférieure (19).

2. Véhicule décapotable selon la revendication 1,
**caractérisé en ce que**
les dispositifs de fermeture (12, 12'), qui coopèrent en tant que module, forment pour le hayon (2), conjointement avec les corps de support (11), les corps de réception (14) et les éléments de verrouillage (15), un étayage stable non pivotant lors de la phase de mouvement, qui peut être positionné de façon précise dans la direction longitudinale et transversale du véhicule.

3. Véhicule décapotable selon l'une des revendications 1 ou 2,
**caractérisé en ce que**
le corps de support (11) est configuré au moins sur une partie en tant que prismoïde en forme de prisme, de coin ou de ponton.

4. Véhicule décapotable selon la revendication 3,
**caractérisé en ce qu'**
une surface de base (23) du prismoïde configuré en tant que prisme de support (22) est fixée au niveau de la plaque de charnière (19), et ses surfaces latérales et/ou de recouvrement (24, 25, 26) peuvent être appliquées au moins en partie contre les surfaces de support respectives (27, 28, 29) d'un creux de support (30) prévu dans le corps de réception (14).

5. Véhicule décapotable selon la revendication 4,
**caractérisé en ce que**
deux surfaces latérales (24, 25) du prisme de support (22), disposées de façon symétrique et s'étendant dans la direction longitudinale du véhicule (16), définissent avec leurs angles d'hélice (W, W') une forme de coin, qui peut être logée au niveau des surfaces de support (27, 28) configurées de façon correspondante dans le corps de réception (14).

6. Véhicule décapotable selon l'une des revendications 4 à 5,
**caractérisé en ce que**
les deux surfaces latérales (24, 25) du prisme de support (22) se terminent à leur base en un épaulement de support (31, 32).

7. Véhicule décapotable selon l'une des revendications 4 à 6,
**caractérisé en ce qu'**
il est prévu en tant qu'élément de verrouillage (15) un axe d'insertion (35), qui peut être fixé respectivement aux mâchoires d'arrêt (33, 34) du corps de réception (14), qui limitent avec les surfaces de support (27, 28) le creux de support (30).

8. Véhicule décapotable selon la revendication 7,
**caractérisé en ce que**
l'axe d'insertion (35) est maintenu de façon coulissante à travers un alésage débouchant (36) présent dans la mâchoire d'arrêt (33), et dans la position de verrouillage, un alésage débouchant (36') présent dans le prisme de support (22) est disposé de façon alignée avec le premier alésage débouchant.

9. Véhicule décapotable selon l'une des revendications 4 à 8,
**caractérisé en ce que**
le prisme de support (22) peut être logé dans le creux de support (30) du corps de réception (14) au niveau d'une butée réglable (38).

10. Véhicule décapotable selon l'une des revendications 4 à 9,
**caractérisé en ce que**
le corps de réception (14) présente une surface de guidage (39) se prolongeant des deux côtés dans le creux de support (30).

11. Véhicule décapotable selon l'une des revendications 7 à 10,
**caractérisé en ce que**
l'axe d'insertion (35) est relié à l'organe d'entraînement (17) par le biais d'un engrenage et/ou d'une bielle de verrouillage (40).

12. Véhicule décapotable selon la revendication 11,
**caractérisé en ce que**
l'organe d'entraînement (17) est un vérin hydraulique, un moteur électrique ou analogue.

13. Véhicule décapotable selon l'une des revendications 2 à 12,
**caractérisé en ce que**
l'unité de charnière (10) peut être fixée à un organe de maintien (21) serrant les deux plaques de charnière (19, 20) l'une contre l'autre, un corps magnétique à déverrouillage automatique étant prévu en tant qu'organe de maintien (21).

14. Véhicule décapotable selon l'une des revendications 1 à 13,
**caractérisé en ce que**
l'unité de charnière (10) présente en tant qu'organe de maintien (21) un raccord à clip amovible.
